Europäisches Patentamt

European Patent Office

Office européen des brevets

(19)

(11) Veröffentlichungsnummer : **0 094 906 B2**

# (12) NEUE EUROPÄISCHE PATENTSCHRIFT

(45) Veröffentlichungstag der neuen Patentschrift :
26.02.92 Patentblatt 92/09

(51) Int. Cl.⁵ : **G02B 6/38, B23K 25/00**

(21) Anmeldenummer : **83810183.0**

(22) Anmeldetag : **02.05.83**

(54) **Verfahren zum Zentrieren und Fixieren einer Lichtleitfaser, nach diesem Verfahren hergestelltes Lichtleiterendstück und Vorrichtung zur Durchführung des Verfahrens.**

(30) Priorität : **12.05.82 CH 2950/82**

(43) Veröffentlichungstag der Anmeldung :
**23.11.83 Patentblatt 83/47**

(45) Bekanntmachung des Hinweises auf die
Patenterteilung :
**15.07.87 Patentblatt 87/29**

(45) Bekanntmachung des Hinweises auf die
Entscheidung über den Einspruch :
**26.02.92 Patentblatt 92/09**

(84) Benannte Vertragsstaaten :
**AT BE CH DE FR GB IT LI LU NL SE**

(56) Entgegenhaltungen :
**EP-A- 0 024 235**
**EP-A- 0 025 013**

(56) Entgegenhaltungen :
**EP-A- 0 078 927**
**WO-A-82/01077**
**DE-A- 2 127 696**
**DE-A- 2 510 171**
**DE-A- 2 843 413**
**DE-B- 2 811 766**
**JP-A-52 119 238**
**US-A- 4 133 601**
**Nachrichten Elektronik 4-1977 S.85-89**

(73) Patentinhaber : **DIAMOND S.A.**
**Via dei Patrizi 5**
**CH-6616 Losone-Locarno (CH)**

(72) Erfinder : **Silvio, Marazzi**
**CH-6654 Cavigliano (CH)**

(74) Vertreter : **Wenger, René et al**
**Hepp & Partner AG Marktgasse 18**
**CH-9500 Wil (CH)**

EP 0 094 906 B2

## Beschreibung

Die Erfindung bezieht sich auf ein Verfahren nach dem Oberbegriff des Anspruchs 1 für die Vertragsstaaten AT, BE, CH, IT, LU, NL, SE bzw. des Anspruchs 1 für die Vertragsstaaten DE, FR, GB.

Derartige Verfahren dienen dazu, bei optischen Steckverbindungen eine hohe Präzision zu erzielen, um Lichtverluste durch nicht genau aufeinander ausgerichtete Faserenden im Kupplungsstück zu vermeiden. Durch die DE-A-26 54 537 ist beispielsweise bereits ein derartiges Verfahren bekannt geworden, bei dem das freie Faserende mit Licht beaufschlagt wird, wobei der austretende Lichtkegel mit einem Detektor gemessen wird und die Lichtleitfaser in einer durch den Detektor ermittelten optimalen Position im Zentrierzylinder verklebt wird. Andere Verfahren arbeiten mit Mikroskopen, welche die Stirnseite des Zentrierzylinders auf einem justierten Bildschirm vergrössert darstellen. Durch Manipulieren der Faser wird die optimale Position auf dem Bildschirm ermittelt und anschliessend die Faser im Zentrierzylinder verklebt (Suzuki und Koyama in "Review of the electrical communication" Band 26, Nr. 5-6, Mai/Juni 1978, Seite 693 ff.). Diese Verfahren sind für eine feldmässige Montage von Lichtleiterendstücken viel zu zeitaufwendig und zu kompliziert, da die Faserenden mit Licht beaufschlagt und manipuliert werden müssen.

Ein anderes Verfahren ist durch die CA-A-1,032,796 bekannt geworden. Gemäss dieser Publikation ist der Zentrierzylinder als Hohlzylinder mit Boden ausgebildet, der teilweise mit einem plastischen Material aufgefüllt wird. Anschliessend wird in aufeinanderfolgenden Arbeitsgängen auf einer Präzisionsdrehbank der Aussenmantel des Zentrierzylinders abgedreht und die axiale Bohrung gebohrt. Nach dem Einführen des Faserendes in die axiale Bohrung wird in axialer Richtung Druck auf das plastische Material ausgeübt, so dass sich die axiale Bohrung formschlüssig um das Faserende schliesst und dieses fixiert. Das eigentliche Faserende wird in der zentrierten Position durch Ausgiessen einer Vertiefung an der Stirnseite mit einem Kunstharz festgehalten. Der Nachteil dieses Verfahrens besteht jedoch darin, dass das Spiel zwischen der axialen Bohrung und dem Faserende von Anfang an minimal sein muss, da sonst eine zentrische Fixierung des Faserendes nicht mehr gewährleistet ist. Eine präzise Zentrierung relativ zum Aussenmantel des Zentrierzylinders ist mit diesem Verfahren ersichtlicherweise nicht möglich, da der Aussenmantel nicht als Referenzfläche dient. Ausserdem ist die Faser an der kritischen Stelle, nämlich in der Ebene der Stirnseite, nicht zentriert, so dass eine Faserkrümmung im Endabschnitt bereits wieder zu einer Exzentrizität führen kann. Das Verfahren ist zudem aufwendig, da mehrere arbeitsintensive Arbeitsgänge wie z.B. Herstellen eines Vorformlings, Füllen des Vorformlings mit plastischem Material, Abdrehen des Vorformlings usw. erforderlich sind.

Aus der WO82/01077 ist ein Verfahren bekannt geworden, bei dem in eine Ausnehmung an der Stirnseite eines Zentrierzylinders ein Zylinder aus plastisch verformbarem Material eingesetzt wird. Durch axialen Druck wird dieser Zylinder derart ausgedehnt, dass er sich in der Ausnehmung verspannt. Anschliessend wird im Zylinder aus verformbarem Material eine bezogen auf den Aussenmantel möglichst konzentrische Bohrung angebracht. Nach dem Einführen der Faser in diese Bohrung wird nochmals ein axialer Druck auf den Zylinder ausgeübt, so dass sich der Zylinder wiederum radial ausdehnt, wobei sich der Durchmesser der Bohrung über die gesamte Länge des Zylinders reduziert und die Faser festgehalten wird. Ein Nachteil dieses Verfahrens besteht darin, dass die Zentrizität der Faser weitgehend von der Genauigkeit der im Zylinder angebrachten Bohrung abhängt. Aus fertigungstechnischen Gründen hat eine derartige Bohrung jedoch zwangsläufig mehr oder weniger grosse Abweichungen vom Nennmass. Eine Korrektur der Faser bei einer allfälligen Exzentrizität während des Pressvorgangs kann jedoch nicht stattfinden, da einerseits keine Führung bezogen auf den Aussenmantel vorhanden ist und da andererseits die axialen Presskräfte in eine radiale, jedoch ungeführte Formänderung umgesetzt werden, bei welcher der Bohrungsdurchmesser unabhängig von seiner Relativlage zum Aussenmantel reduziert wird. Der Grad der Zentrizität steht damit bereits mit dem Anbringen der axialen Bohrung fest und kann durch den Pressvorgang nicht mehr beeinflusst werden.

Die für die Vertragsstaaten DE, FR, GB zum Stand der Technik nach Artikel 54(3) gehörende EP-A-78 927 beschreibt ein Lichtleiterendstück, bei dem die Faser an der Stirnseite des Endstückes mittels einer konzentrischen Materialstauchung fixiert und zentriert wird. Allerdings ist das Endstück ausschliesslich aus einem mit dem Stauchwerkzeug deformierbaren Material gefertigt. Dabei besteht die Gefahr, dass die Massgenauigkeit des Aussenmantels sowohl beim Stauchvorgang als auch beim späteren Hantieren mit dem Stecker beeinträchtigt wird.

Es ist daher Aufgabe der Erfindung, ein Verfahren der eingangs genannten Art zu schaffen, welches die Nachteile des Bekannten vermeidet und mit dem auf rationelle Art und Weise Lichtleiterendstücke hergestellt werden können, welche feldmontierbar, d.h. an Ort und Stelle austauschbar und neu zentrierbar sind. Das Verfahren soll sich insbesondere auch für Lichtleitfasern eignen, deren Ist-Durchmesser grosse Abweichungen gegenüber dem Nenn-Durchmesser aufweist. Diese Aufgabe wird erfindungsgemäss mit einem Verfahren mit den Merkmalen des Anspruchs 1 für die Vertragsstaaten AT, BE, CH, IT, LU, NL, SE bzw. des Anspruchs 1 für die Vertragsstaaten DE, FR, GB gelöst.

Durch dieses Vorgehen erfolgt ersichtlicherweise gleichzeitig mit dem Fixieren des Faserendes auch noch eine Zentrierung, da das Stauchwerkzeug unmittelbar am Aussenmantel des Zentrierzylinders geführt ist. Auf diese Weise kann die axiale Bohrung ohne weiteres grösseres Spiel zum Faserende aufweisen, da das Faserende beim Stauchvorgang auch dann noch zentriert wird, wenn das Faserende zuerst exzentrisch in der axialen Bohrung liegt. Das relativ grosse Spiel zwischen Bohrung und Faser erleichtert das Einschieben und macht die genaue Bestimmung des Faserdurchmessers überflüssig. Auch Fasern mit grossen Toleranzschwankungen können ohne weiteres noch verarbeitet werden.

Wenn die Stirnseite des Zentrierzylinders nach dem Stauchen geschliffen wird, werden die allenfalls durch den Stauch prozess entstehenden Ringwulste beseitigt und die Faser verläuft absolut plan mit dem Zentrierzylinder.

Besonders vorteilhaft ist es, wenn vor dem Stauchen die Lichtleitfaser an der sie umgebenden Isolation mit dem Zentrierzylinder verklebt wird. Dadurch wird die Lichtleitfaser einerseits zusätzlich fixiert und andererseits bildet die Klebestelle einen Schutz gegen das Eindringen von Feuchtigkeit und Schmutz.

Die Erfindung betrifft auch ein Lichtleiterendstück, welches nach dem eingangs genannten Verfahren hergestellt ist. Ein derartiges Lichtleiterendstück hat besonders vorteilhafte Eigenschaften, wenn es gemäss den Merkmalen in Anspruch 4 ausgebildet ist. Die konzentrische Materialstauchung bewirkt eine sichere Fixierung der Faser, wobei die zentrische Fixierung bis unmittelbar an die Stirnseite des Zentrierzylinders reicht. Da der Zentrierzylinder aus einem hohlzylindrischen Aussenteil aus relativ hartem Material besteht, wird durch den Zentriervorgang die Massgenauigkeit des Aussenmantels nicht beeinträchtigt. Aber auch Schläge und Stösse beim feldmässigen Hantieren mit dem Stecker beeinträchtigen die zentrische Lage des Faserendes nicht. Auch durch den Kupplungsvorgang selbst, bei dem eine gewisse Kraft in axialer Richtung auf die Stirnfläche ausgeübt wird, erfolgt keine Deformation des Endabschnittes.

Ersichtlicherweise schützt das harte Aussenteil die empfindliche Faser, während das Kernteil eine einfache Bearbeitung ermöglicht. Die Teile sind unkompliziert und lassen sich in wenigen Arbeitsgängen fertig bearbeiten.

Eine weitere Vereinfachung des Lichtleiterendstückes ergibt sich dadurch, dass sich das Kernteil etwa über die ganze Länge des Aussenteils erstreckt und dass die axiale Bohrung zur Aufnahme des von der Isolation befreiten Faserendes einen Abschnitt mit einem grösseren Durchmesser zur Aufnahme eines mit Isolation versehenen Faserabschnittes aufweist. Auf diese Weise muss zur Aufnahme des mit Isolation versehenen Faserabschnittes nicht noch ein zusätzliches Bauteil vorgesehen werden. Die Isolation kann unmittelbar mit dem Kernteil verklebt werden, wodurch ein Ausreissen der Isolation aus dem Lichtleiterendstück verunmöglicht wird. Wenn der Durchmesser der axialen Bohrung zur Aufnahme des Faserendes grösser ist als der grösste zulässige Faserdurchmesser, wird, wie bereits beschrieben, insbesondere die Montage erleichtert.

Besonders vorteilhaft ist es, wenn das Aussenteil aus Hartmetall gefertigt ist. Dieses Material gewährleistet eine präzise Führung des Stauchwerkzeuges bzw. der Führungshülse, da ein Verbiegen durch mechanische Einwirkung praktisch ausgeschlossen ist.

Wenn das Kernteil aus einem relativ weichen Metall, vorzugsweise aus einer Metall-Legierung gefertigt ist, kann der Stauchprozess auf besonders einfache Weise und ohne zu grossen Kraftaufwand durchgeführt werden. Durch eine Metall-Legierung können auf besonders einfache Weise ideale Materialeigenschaften erzielt werden. Eine besonders einfache Montage des Kernteiles ergibt sich, wenn dieses durch Lötung im Aussenteil befestigt ist. Eine Lötung erlaubt relativ hohe Betriebstemperaturen. Je nach Anwendungsfall kann das Kernteil selbstverständlich auch durch Einkleben, Einpressen oder gar durch Eingiessen befestigt werden.

Die Vorrichtung nur für die Vertragsstaaten AT, BE, CH, LU, NL, SE zur Durchführung des Verfahrens ist gekennzeichnet durch eine Führungshülse, welche auf den Zentrierzylinder aufschiebbar ist, sowie durch einen in der Führungshülse verschiebbaren Stempel, dessen Stirnseite mit einem Stauchwerkzeug versehen ist, welches eine ringförmige Stauchkante aufweist, dessen Durchmesser grösser ist als der Durchmesser der axialen Bohrung im Zentrierzylinder. Bei dieser Anordnung wird das Stauchwerkzeug vom Aussenmantel des Zentrierzylinders geführt. Dieser Aussenmantel trägt später auch das Kupplungsstück der Steckverbindung, welches die beiden Lichtleiterendstücke zusammenhält. Ersichtlicherweise ist so gewährleistet, dass die mit dem Stauchwerkzeug erzielte Materialstauchung an der Stirnseite des Zentrierzylinders genau konzentrisch zum Aussenmantel des Zentrierzylinders verläuft, so dass auch das Faserende zwangsläufig diese Position einnimmt.

Auf besonders einfache Weise lässt sich ein Stauchwerkzeug herstellen, wenn es ein im Querschnitt etwa keilförmiger Ring ist, wobei die Keilspitze die Stauchkante bildet. Ein derartiges Werkzeug lässt sich relativ einfach herstellen. Eine tief in den Zentrierzylinder wirkende Stauchung lässt sich erzielen, wenn der Keilwinkel weniger als 90 Grad beträgt. Um eine besonders hohe Präzision zu erzielen und um eine rasche Abnützung zu vermeiden, ist es vorteilhaft, wenn das Stauchwekzeug aus Hartmetall gefertigt ist.

Ein Ausführungsbeispiel der Erfindung ist in den Zeichnungen dargestellt und wird nachstehend genauer

3

beschrieben. Es zeigen:

Figur 1 einen stark vergrösserten Querschnitt durch ein Lichtleiterendstück mit aufgesetztem Stauchwerkzeug nach dem Stauchen,

Figur 2 eine Draufsicht auf die Stirnseite eines Lichtleiterendstückes nach dem Stauchen, und

Figur 3 eine Draufsicht auf die Unterseite eines Stauchwerkzeuges.

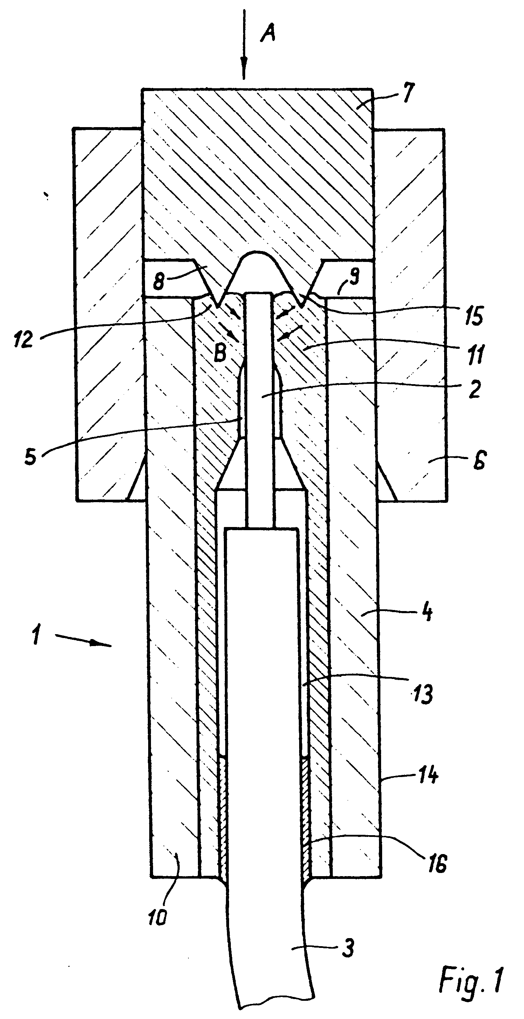

Wie in Figur 1 dargestellt, besteht ein Lichtleiterendstück 1 aus einem hohlzylindrischen Aussenteil 10 aus relativ hartem Material und aus einem Kernteil 11 aus relativ weichem Material. Das Aussenteil 10 besteht vorzugsweise aus Hartmetall, kann jedoch in bestimmten Anwendungsfällen auch aus einem anderen harten oder gehärteten Metall oder gar aus einem harten Kunststoff gefertigt sein. Das Kernteil 11 besteht aus einem plastisch verformbaren Metall oder evtl. aus einem geeigneten Kunststoff. Besonders gute Resultate wurden beispielsweise mit einer silberhaltigen Legierung erzielt. Es wäre auch möglich, das Kernteil lediglich als Einsatz an der Stirnseite des Zentrierzylinders auszubilden.

Das Kernteil 11 weist eine axiale Bohrung 5 zur Aufnahme des Faserendes 2 auf. Ein Abschnitt 13 grösseren Durchmessers nimmt einen mit Isolation 3 versehenen Abschnitt der Lichtleitfaser auf. Die Lichtleitfaser ist an der Isolation 3 an einer Klebestelle 16 mit dem Kernteil 11 verklebt. Die axiale Bohrung 5 verläuft bereits konzentrisch zum Aussenmantel 14 des Zentrierzylinders 4. Das Spiel zwischen der axialen Bohrung 5 und dem Faserende 2 kann jedoch verhaltnismässig gross sein. Dadurch ist eine leichte Montage auch bei grossen Abweichungen vom Nenn-Durchmesser des Faserendes 2 gewährleistet. Zur Veranschaulichung der masslichen Verhältnisse werden nachstehend beispielsweise ein paar wichtige Masse in Millimetern wiedergegeben:

Faserdurchmesser am Faserende 2 = $125 \pm 4\ \mu$

Durchmesser der axialen Bohrung 5 = ca. $135\ \mu$

Durchmesser des Aussenmantels 14 = $3,5\ mm + 0 - 1\ \mu$

Konzentrizität Aussenmantel/axiale Bohrung = kleiner als $1\ \mu$

An der Stirnseite 9 des Zentrierzylinders 4 ist eine konzentrische Materialstauchung 12 angebracht, welche das Faserende 2 fixiert und zentriert. Ein besonders grosser Vorteil bei dieser Anordnung besteht darin, dass das Faserende 2 auch unmittelbar an der Stirnseite fixiert und zentriert ist. Ersichtlicherweise muss insbesondere in der Ebene der Stirnseite 9 höchste Massgenauigkeit und eine sichere Halterung gewährleistet sein, um Lichtverluste im Kupplungsstück zu vermeiden. Die Materialstauchung 12 beeinträchtigt den Kupplungsmechanismus in keiner Weise, da die Stirnseite 9 nach dem Stauchen geschliffen und poliert wird. Am fertigen Lichtleiterendstück ist so die Lichtleitfaser am einen Ende durch die Materialstauchung 12 und am anderen Ende durch die Klebestelle 16 fixiert.

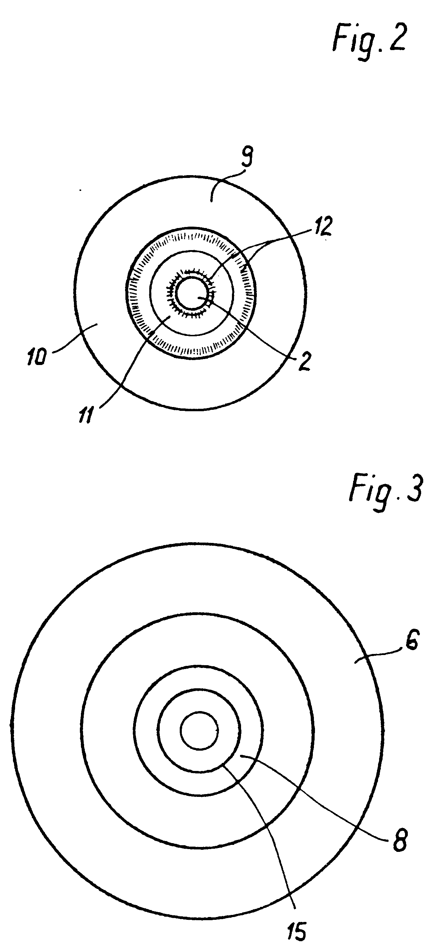

Die Materialstauchung erfolgt mit Hilfe eines Stempels 7, der in einer Führungshülse 6 hochpräzis geführt ist. Der Stempel 7 weist ein Stauchwerkzeug 8 auf, welches, wie insbesondere aus Figur 3 ersichtlich ist, als Ring ausgebildet ist. Der Durchmesser der Stauchkante 15 muss ersichtlicherweise grösser sein als der grösste mögliche Durchmesser der axialen Bohrung 5. Das Stauchwerkzeug 8 kann entweder unmittelbar in den Stempel 7 integriert sein oder es kann lösbar am Stempel 7 befestigt sein. Der Stempel 7 lässt sich in eine herkömmliche Presse einspannen.

Sowohl die Führungshülse 6 als auch das Stauchwerkzeug 8 bestehen vorzugsweise aus Hartmetall.

Ein Montagevorgang eines Lichtleiterendstükkes geht folgenderweise vor sich: Zuerst wird ein Abschnitt der Lichtleitfaser von der Isolation 3 befreit, so dass ein Faserende 2 freigelegt ist. Anschliessend wird das Faserende 2 in eine fertig vorbereitete Zentrierhülse eingeschoben, wobei das Faserende über die Stirnseite 9 ragt. Anschliessend wird die Isolation 3 mit Hilfe der Klebestelle 16 fest mit dem Zentrierzylinder 4 verbunden. Das Faserende 2 wird etwa 30 bis 50 $\mu$ über der Stirnseite 9 abgeschnitten oder abgebrochen.

Das derart vorbereitete Lichtleiterendstück wird nun an der Stirnseite gestaucht. Zu diesem Zweck wird die Führungshülse 6 über den Aussenmantel 14 des Zentrierzylinders geschoben. In der Führungshülse wird der Stempel 7 in Pfeilrichtung A gegen die Stirnseite 9 des Zentrierzylinders gepresst. Dabei dringt die Stauchkante 15 des Stauchwerkzeuges 8 in das weiche Material des Kernteils ein und bewirkt eine plastische Verformung in Pfeilrichtung B. Durch die plastische Verformung umschliesst das Kernstück 11 das Faserende 2 formschlüssig und fixiert es. Eine allfällige Exzentrizität des Faserendes 2 innerhalb der axialen Bohrung 5 wird durch die ringförmige Stauchung 12 ausgeglichen, so dass nach dem Stauchprozess das Faserende 2 absolut konzentrisch zum Aussenmantel 14 verläuft. Anschliessend wird die Stirnfläche 9 geschliffen und poliert, so dass das Lichtleiterendstück mit den restlichen, in den Zeichnungen nicht dargestellten Kupplungsteilen versehen werden kann.

Dieser Montagevorgang ist ersichtlicherweise äusserst rationell, so dass grössere Mengen von Lichtleiterendstücken kostengünstig produziert werden können. Die Zentrierung des Faserendes 2 erfolgt mit dem Stauchwerkzeug 8 auf einfachste Weise, ohne dass komplizierte Manipulationen und Messungen erforderlich sind. Die gleichzeitige Fixierung ohne Klebemittel unmittelbar im Bereich der Stirnseite 9 gewährleistet äusserste Präzision und sichere Halterung. Das Fehlen von Klebstoff oder Kunstharz im Bereich der Stirnseite 9 erleichtert ersichtlicherweise auch das anschliessende Schleifen und Polieren der Stirnseite.

**Patentansprüche**

**Patentansprüche Für folgenden Vertragsstaaten: AT, BE, CH, IT, LU, NL, SE**

1. Verfahren zum Zentrieren und fixieren einer Lichtleitfaser in einem Lichtleiterendstück zur optischen Koppelung von zwei Faserenden, wobei die von der Isolation befreite Faser (2) derart in einen Zentrierzylinder (4) geschoben wird, welcher mit einer axialen Bohrung (5) zur Aufnahme des Faserendes versehen ist, dass die Faser etwas über die Stirnseite des Zentrierzylinders ragt oder mit dieser etwa bündig verläuft, dadurch gekennzeichnet, dass zuerst eine Führungshülse (6) über den Zentrierzylinder (4) geschoben wird, und dass anschliessend in der Führungshülse ein Stempel (7), dessen Stirnseite mit einem Stauchwerkzeug (8) versehen ist, das eine ringförmige Stauchkante (15) aufweist, derart gegen die Stirnseite (9) des Zentrierzylinders (4) gepresst wird, dass das Stauchwerkzeug im Bereich der Stirnseite die Bohrung konzentrisch umgibt und dabei durch plastische Materialverformung eine ringförmige Vertiefung um die Bohrung (5) bildet, wobei das Faserende (2) zentrisch zum Aussenmantel (14) des Zentrierzylinders fixiert wird.

2. Verfahren nach Anspruch 1, dadurch gekennzeichnet, dass die Stirnseite des Zentrierzylinders nach dem Stauchen geschliffen wird.

3. Verfahren nach Anspruch 1, dadurch gekennzeichnet, dass vor dem Stauchen die Lichtleitfaser an der sie umgebenden Isolation (3) mit dem Zentrierzylinder verklebt wird.

4. Lichtleiterendstück für eine Lichtleitfaser, insbesondere hergestellt nach dem Verfahren nach Anspruch 1, bestehend aus einem Zentrierzylinder, der eine Stirnseite zur Koppelung mit einem gleichartigen Lichtleiterendstück aufweist und aus einem hohlzylindrischen Aussenteil (10) besteht, welches zum fixieren der Faser wenigstens im Bereich der Stirnseite mit einem Kernteil (11) aus plastisch verformbaren Material gefüllt ist, das mit einer axialen Bohrung zur Aufnahme des Faserendes versehen ist, dadurch gekennzeichnet, dass das hohlzylindrische Aussenteil (10) aus Hartmetall besteht und dass das Faserende in der Ebene der Stirnseite (9) von einer konzentrischen, das Faserende im Abstand ringförmig umgebenden Materialstauchung (12) am Kernteil bezogen auf den Aussendurchmesser des Zentrierzylinders fixiert und zentriert ist, wobei der Durchmesser der Bohrung im Kernteil nur im Bereich der Stirnseite durch die Materialstauchung reduziert ist.

5. Lichtleiterendstück nach Anspruch 4, dadurch gekennzeichnet, dass sich das Kernteil etwa über die ganze Länge des Aussenteils erstreckt und dass die axiale Bohrung zur Aufnahme des von der Isolation befreiten Faserendes (2) einen Abschnitt (13) mit einem grösseren Durchmesser zur Aufnahme eines mit Isolation versehenen faserabschnittes aufweist.

6. Lichtleiterendstück nach Anspruch 5, dadurch gekennzeichnet, dass der mit Isolation versehene Faserabschnitt mit dem Kernteil verklebt ist.

7. Lichtleiterendstück nach Anspruch 5 oder 6, dadurch gekennzeichnet, dass der Durchmesser der axialen Bohrung (5) zur Aufnahme des Faserendes grösser ist als der grösste zulässige Faserdurchmesser.

8. Lichtleiterendstück nach Anspruch 7, dadurch gekennzeichnet, dass das Kernteil aus einem relativ weichen Metall, vorzugsweise aus einer Metall-Legierung gefertigt ist.

9. Lichtleiterendstück nach Anspruch 8, dadurch gekennzeichnet, dass das Kernteil durch eine Lötung im Aussenteil befestigt ist.

10. Vorrichtung zur Durchführung des Verfahrens nach Anspruch 1, gekennzeichnet durch eine Führungshülse (6), welche auf den Zentrierzylinder (4) aufschiebbar ist, sowie durch einen in der Führungshülse verschiebbaren Stempel (7), dessen Stirnseite mit einem Stauchwerkzeug (8) versehen ist, welches eine ringförmige Stauchkante (15) aufweist, deren Durchmesser grösser ist als der Durchmesser der axialen Bohrung im Zentrierzylinder.

11. Vorrichtung nach Anspruch 10, dadurch gekennzeichnet, dass das Stauchwerkzeug ein im Querschnitt etwa keilförmiger Ring ist, wobei die Keilspitze die Stauchkante bildet.

12. Vorrichtung nach Anspruch 11, dadurch gekennzeichnet, dass der Keilwinkel kleiner als 90 Grad ist.

13. Vorrichtung nach Anspruch 11, dadurch gekennzeichnet, dass das Stauchwerkzeug aus Hartmetall gefertigt ist.

**Patentansprüche Für folgenden Vertragsstaaten: DE, FR, GB**

1. Verfahren zum Zentrieren und Fixieren einer Lichtleitfaser in einem Lichtleiterendstück zur optischen Koppelung von zwei Faserenden, wobei die von der Isolation befreite Faser in einen Zentrierzylinder geschoben wird, der aus einem hohlzylindrischen Aussenteil (10) aus relativ hartem Material besteht, welches wenigstens im Bereich der Stirnseite (9) mit einem Kernteil (11) aus plastisch verformbarem Material gefüllt ist, wobei letzteres mit einer axialen Bohrung zur Aufnahme des Faserendes versehen ist, und wobei die Faser vor dem Zentrieren etwas über die Stirnseite des Zentrierzylinders ragt oder mit dieser etwa bündig verläuft, wobei zuerst eine Führungshülse (6) über das Aussenteil (10) geschoben wird und anschliessend in der Führungshülse ein Stempel (7), dessen Stirnseite mit einem Stauchwerkzeug (8) versehen ist, das eine ringförmige Stauchkante (15) aufweist, derart gegen das Kernteil (11) an der Stirnseite (9) gepresst wird, dass das Stauchwerkzeug im Bereich der Stirnseite die Bohrung konzentrisch umgibt und dabei durch plastische Materialverformung eine ringförmige Vertiefung um die Bohrung bildet, wobei das Faserende (2) zentrisch zum Aussenmantel (14) des Zentrierzylinders fixiert wird.

2. Verfahren nach Anspruch 1, dadurch gekennzeichnet, dass die Stirnseite des Zentrierzylinders nach dem Stauchen geschliffen wird.

3. Verfahren nach Anspruch 1, dadurch gekennzeichnet, dass vor dem Stauchen die Lichtleitfaser an der sie umgebenden Isolation (3) mit dem Zentrierzylinder verklebt wird.

4. Lichtleiterendstück für eine Lichtleitfaser, insbesondere hergestellt nach dem Verfahren nach Anspruch 1, bestehend aus einem Zentrierzylinder, der eine Stirnseite zur Koppelung mit einem gleichartigen Lichtleiterendstück aufweist und aus einem hohlzylindrischen Aussenteil (10) besteht, welches zum Fixieren der Faser wenigstens im Bereich der Stirnseite mit einem Kernteil (11) aus plastisch verformbaren Material gefüllt ist, das mit einer axialen Bohrung zur Aufnahme des Faserendes versehen ist, wobei das hohlzylindrische Aussenteil (10) aus Hartmetall besteht und das Faserende in der Ebene der Stirnseite (9) von einer konzentrischen, das Faserende im Abstand ringförmig umgebenden Materialstauchung (12) am Kernteil, bezogen auf den Aussendurchmesser des Zentrierzylinders, fixiert und zentriert ist, wobei der Durchmesser der Bohrung im Kernteil nur im Bereich der Stirnseite durch die Materialstauchung reduziert ist.

5. Lichtleiterendstück nach Anspruch 4, dadurch gekennzeichnet, dass sich das Kernteil etwa über die ganze Länge des Aussenteils erstreckt und dass die axiale Bohrung zur Aufnahme des von der Isolation befreiten faserendes (2) einen Abschnitt (13) mit einem grösseren Durchmesser zur Aufnahme eines mit Isolation versehenen Faserabschnittes aufweist.

6. Lichtleiterendstück nach Anspruch 5, dadurch gekennzeichnet, dass der mit Isolation versehene Faserabschnitt mit dem Kernteil verklebt ist.

7. Lichtleiterendstück nach Anspruch 5 oder 6, dadurch gekennzeichnet, dass der Durchmesser der axialen Bohrung (5) zur Aufnahme des Faserendes grösser ist als der grösste zulässige Faserdurchmesser.

8. Lichtleiterendstück nach Anspruch 7, dadurch gekennzeichnet, dass das Kernteil aus einem relativ weichen Metall, vorzugsweise aus einer Metall-Legierung gefertigt ist.

9. Lichtleiterendstück nach Anspruch 8, dadurch gekennzeichnet, dass das Kernteil durch eine Lötung im Aussenteil befestigt ist.

## Claims

**Claims for the following Contracting States: AT, BE, CH, IT, LU, NL, SE**

1. Method of centering and fixing an optical fibre in an optical fibre end piece for the optical coupling of two fibre ends, whereby the fibre (2) which has been stripped of its insulation is pushed into a centering cylinder (4), which is provided with an axial bore (5) for accommodation of the fibre end, in such a way that the fibre protrudes slightly beyond the face of the cylinder or is flush with this, characterized in that firstly a guide sleeve (6) is pushed over the centering cylinder (4) and that subsequently a punch (7), the face of which is provided with an upsetting tool (8) which possesses an annular upsetting edge (15), is pressed in the guide sleeve against the face (9) in such a way that the upsetting tool surrounds the bore concentrically in the area of the face and, with that, forms an annular depression around the bore (5) through plastic deformation of the material, whereby the fibre end (2) is fixed centrally in relation to the outer jacket (14) of the centering cylinder.

2. Method according to claim 1, characterized in that the face of the centering cylinder is ground after upsetting.

3. Method according to claim 1, characterized in that, prior to upsetting, the optical fibres are glued to the centering cylinder on the insulation (3) surrounding them.

4. Optical fibre end piece for an optical fibre, in particular manufactured according to the method according to claim 1, comprising a centering cylinder which possesses a face for coupling with a similar optical fibre end piece and which comprises a hollow cylindrical outer part (10) which, for the fixing of the fibre, is filled, at least in the area of the face, with a core part (11) of a plastically deformable material which is provided with a bore for accommodation of the fibre end, whereby the hollow cylindrical outer part (10) comprises a hard metal and the fibre end, in the plane of the face (9), is fixed and centred in relation to the outer diameter of the centering cylinder by a concentric, annular upsetting deformation of the material (12) which surrounds the fibre end with a clearance on the core part, whereby the diameter of the bore is reduced by the upsetting deformation in the material only in the area of the face.

5. Optical fibre end piece according to claim 4, characterized in that the core part extends approximately the entire length of the outer part and that the axial bore, for accommodation of the fibre end which has been stripped of its insulation (2), possesses a section (13) with a larger diameter for accommodation of a fibre section which is provided with insulation.

6. Optical fibre end piece according to claim 5, characterized in that the fibre section which is provided with insulation is glued to the core part.

7. Optical fibre end piece according to claims 5 or 6, characterized in that the diameter of the axial bore (5) for accommodation of the fibre end is greater than the largest allowable fibre diameter.

8. Optical fibre end piece according to claim 7, characterized in that the core part is fabricated from a relatively soft metal, preferably a metal alloy.

9. Optical fibre end piece according to claim 8, characterized in that the core part is fixed to the outer part by soldering.

10. Device for carrying out the method according to claim 1, characterized by a guide sleeve (6), which is able to be slid onto the centering cylinder (4), as well as by a punch (7) which is able to be slid in the guide sleeve, the face of which is provided with an upsetting tool (8) which possesses an annular upsetting edge (15) whose diameter is greater than the diameter of the axial bore in the centering cylinder.

11. Device according to claim 10, characterized in that the upsetting tool is, in cross section, an approximately wedge formed ring, whereby the wedge tip forms the upsetting edge.

## Claims for the following Contracting States : DE, FR, GB

1. Method of centering and fixing an optical fibre in an optical fibre end piece for the optical coupling of two fibre ends, whereby the fibre which has been stripped of its insulation is pushed into a centralising cylinder which comprises a hollow cylindrical outer part (10) of a relatively hard material and which is filled, at least in the area of the face (9), with a core part (11) of a plastically deformable material, whereby the latter is provided with an axial bore to accommodate the end of the fibre, and whereby the fibre, prior to centering, protrudes slightly beyond the face of the centering cylinder or is approximately flush with this, whereby firstly a guide sleeve (6) is pushed over the outer part (10) and subsequently a punch (7), whose face is provided with an upsetting tool (8) which possesses an annular upsetting edge (15), is pressed in the guide sleeve against the core part (11) in such a way that the upsetting tool surrounds the bore concentrically in the area of the face and, with that, forms an annular indentation around the bore through plastic deformation of the material, whereby the fibre end (2) is fixed centrally in relation to the outer jacket (14).

2. Method according to claim 1, characterized in that the face of the centering cylinder is ground after upsetting.

3. Method according to claim 1, characterized in that, prior to upsetting, the optical fibres are glued to the centering cylinder on the insulation (3) surrounding them.

4. Optical fibre end piece for an optical fibre, in particular manufactured according to the method according to claim 1, comprising a centering cylinder which possesses a face for coupling with a similar optical fibre end piece and which comprises a hollow cylindrical outer part (10) which, for the fixing of the fibre, is filled, at least in the area of the face, with a core part (11) of a plastically deformable material which is provided with a bore for accommodation of the fibre end, whereby the hollow cylindrical outer part (10) comprises a hard metal and the fibre end, in the plane of the face (9) , is fixed and centred in relation to the outer diameter of the centering cylinder by a concentric, annular upsetting deformation of the material (12) which surrounds the fibre end with a clearance on the core part, whereby the diameter of the bore is reduced by the upsetting deformation in the material only in the area of the face.

5. Optical fibre end piece according to claim 4, characterized in that the core part extends approximately the entire length of the outer part and that the axial bore, for accommodation of the fibre end which has been stripped of its insulation (2), possesses a section (13) with a larger diameter for accommodation of a fibre section which is provided with insulation.

6. Optical fibre end piece according to claim 5, characterized in that the fibre section which is provided with insulation is glued to the core part.

7. Optical fibre end piece according to claims 5 or 6, characterized in that the diameter of the axial bore (5) for accommodation of the fibre end is greater than the largest allowable fibre diameter.

8. Optical fibre end piece according to claim 7, characterized in that the core part is fabricated from a relatively soft metal, preferably a metal alloy.

9. Optical fibre end piece according to claim 8, characterized in that the core part is fixed to the outer part by soldering.

**Revendications**

**Revendications pour les Etats contractants suivants: AT, BE, CH, IT, LU, NL, SE**

1. Procédé pour centrer et fixer une fibre optique dans un élément d'extrémité de guide de lumière en vue du couplage optique de deux extrémités de fibres, la fibre (2) dépourvue de l'isolant étant insérée dans un cylindre de centrage muni d'un alésage axial (5) destiné à recevoir l'extrémité de la fibre, de telle sorte que la fibre fasse saillie légèrement au-delà de la face frontale du cylindre de centrage ou soit approximativement de niveau avec cette dernière, caractérisé en ce que l'on emmanche tout d'abord une douille de guidage (6) sur le cylindre de centrage (4), et en ce qu'on enfonce ensuite dans la douille de guidage un poinçon (7) dont la face frontale est pourvue d'un outil de refoulement (8) qui présente une arête de refoulement annulaire, contre la face frontale (9) du cylindre de centrage (4), de telle sorte que l'outil de refoulement entoure concentriquement l'alésage dans la zone de la face frontale et qu'un renfoncement annulaire se forme autour de l'alésage (5) par déformation plastique du matériau, l'extrémité (2) de la fibre étant ainsi fixée en étant centrée par rapport à l'enveloppe extérieure (14) du cylindre de centrage.

2. Procédé selon la revendication 1, caractérisé en ce que l'on meule la face frontale du cylindre de centrage après le refoulement.

3. Procédé selon la revendication 1, caractérisé en ce qu'avant le refoulement, on colle la fibre optique au cylindre de centrage, au niveau de l'isolant (3) qui l'entoure.

4. Elément d'extrémité de guide de lumière pour une fibre optique, fabriquée notamment conformémennt au procédé selon la revendication 1, constitué par un cylindre de centrage qui présente une face frontale d'accouplement à un élément d'extrémité de guide de lumière de même type et qui est constitué par une partie extérieure cylindrique creuse (10) remplie, pour la fixation de la fibre, au moins dans la zone de la face frontale, par une partie formant noyau (11) réalisée en un matériau plastiquement déformable, qui est pourvue d'un alésage axial destiné à recevoir l'extrémité de la fibre, caractérisé en ce que la partie extérieure cylindrique creuse (10) est constituée d'un métal dur et en ce que l'extrémité de la fibre est, dans le plan de la face frontale, (9) fixée et centrée, sur la partie formant noyau et par rapport au diamètre extérieur du cylindre de centrage, au moyen d'un bourrelet concentrique de matière refoulée (12), qui entoure, à distance et sous forme annulaire, l'extrémité de la fibre, le diamètre de l'alésage dans la partie formant noyau n'étant réduite, par le bourrelet de matière refoulée, que dans la zone de la face frontale.

5. Elément d'extrémité de guide de lumière selon la revendication 4, caractérisé en ce que la partie formant noyau s'étend à peu près sur toute la longueur de la partie extérieure et en ce que l'alésage axial de réception de l'extrémité (2) de la fibre dépourvue de l'isolant, comporte un tronçon (13) possédant un diamètre supérieur pour recevoir un tronçon de la fibre, muni d'isolant.

6. Elément d'extrémité de guide de lumière selon la revendication 5, caractérisé en ce que le tronçon de fibre, muni d'isolant, est collé à la partie formant noyau.

7. Elément d'extrémité de guide de lumière selon la revendication 5 ou 6, caractérisé en ce que le diamètre de l'alésage axial (5) destiné à recevoir l'extrémité de la fibre est supérieur au diamètre maximal admissible de la fibre.

8. Elément d'extrémité de guide de lumière selon la revendication 7, caractérisé en ce que la partie formant noyau est réalisée en un métal relativement mou, de préférence en un alliage métallique.

9. Elément d'extrémité de guide de lumière selon la revendication 8, caractérisé en ce que la partie formant noyau est fixée par soudage dans la partie extérieure.

10. Dispositif pour la mise en oeuvre du procédé selon la revendication 1, caractérisé par une douille de guidage (6), qui est emmanchable sur le cylindre de centrage (4) ainsi que par un poinçon (7) pouvant être déplacé dans la douille de guidage et dont la face frontale est munie d'un outil de refoulement (8), qui possède une arête annulaire de refoulement (15), dont le diamètre est supérieur au diamètre de l'alésage axial du cylindre de centrage.

11. Dispositif selon la revendication 10, caractérisé en ce que l'outil de refoulement est un anneau qui possède une section transversale sensiblement en forme de coin, la pointe du coin formant l'arête de refoulement.

12. Dispositif selon la revendication 11, caractérisé en ce que l'angle du coin est inférieur à 90 degrés.

13. Dispositif selon la revendication 11, caractérisé en ce que l'outil de refoulement est réalisé en un métal

dur.

**Revendications pour les Etats contractants suivants: DE, FR, GB**

1. Procédé pour centrer et fixer une fibre optique dans un élément d'extrémité de guide de lumière en vue du couplage optique des deux extrémités de fibres, selon lequel on insère la fibre dépourvue de l'isolant dans un cylindre de centrage qui est constitué par une partie extérieure cylindrique creuse (10), réalisée en un matériau relativement dur et remplie, au moins dans la zone de la face frontale (9), par une partie formant noyau (11) réalisée en un matériau plastiquement déformable, cette partie formant noyau étant munie d'un alésage axial destiné à recevoir l'extrémité de la fibre, tandis que la fibre, avant le centrage, fait saillie légèrement au-delà de la face frontale du cylindre de centrage ou est approximativement de niveau avec cette dernière, procédé selon lequel on emmanche tout d'abord une douille de guidage (6) sur la partie extérieure (10), et on enfonce ensuite, dans la douille de guidage, un poinçon (7) dont la face frontale est pourvue d'un outil de refoulaient (8) qui présente une arête de refoulement, contre la partie formant noyau (11) et au niveau de la face frontale (9), de telle sorte que l'outil de refoulement entoure concentriquement l'alésage dans la zone de la face frontale et qu'un renfoncement annulaire se forme autour de l'alésage par déformation plastique du matériau, l'extrémité (2) de la fibre étant ainsi fixée en étant centrée par rapport à l'enveloppe extérieure (14) du cylindre de centrage.

2. Procédé selon la revendication 1, caractérisé en ce que l'on meule la face frontale du cylindre de centrage après le refoulement.

3. Procédé selon la revendication 1, caractérisé en ce qu'avant le refoulement, on colle la fibre optique au cylindre de centrage, au niveau de l'isolant (3) qui l'entoure.

4. Elément d'extrémité de guide de lumière pour une fibre optique, fabriquée notamment conformément au procédé selon la revendication 1, constitué par un cylindre de centrage qui présente une face frontale d'accouplement à un élément d'extrémité de guide de lumière de même type et qui est constitué par une partie extérieure cylindrique creuse (10) remplie, pour la fixation de la fibre, au moins dans la zone de la face frontale, par une partie formant noyau (11) réalisée en un matériau plastiquement déformable, qui est pourvue d'un alésage axial destiné à recevoir l'extrémité de la fibre, la partie extérieure cylindrique creuse (10) étant constituée d'un métal dur tandis que l'extrémité de la fibre est, dans le plan de la face frontale (9), fixée et centrée, sur la partie formant noyau et par rapport au diamètre extérieur du cylindre de centrage, au moyen d'un bourrelet concentrique de matière refoulée (12), qui entoure, à distance et sous forme annulaire, l'extrémité de la fibre, le diamètre de l'alésage dans la partie formant noyau n'étant réduite, par le bourrelet de matière refoulée, que dans la zone de la face frontale.

5. Elément d'extrémité de guide de lumière selon la revendication 4, caractérisé en ce que la partie formant noyau s'étend à peu près sur toute la longueur de la partie extérieure et en ce que l'alésage axial de réception, de l'extrémité (2) de la fibre, dépourvue de l'isolant, présente un tronçon (13) possédant un diamètre supérieur pour la réception d'un tronçon de fibre muni d'isolant.

6. Elément d'extrémité de guide de lumière selon la revendication 5, caractérisé en ce que le tronçon de fibre, muni d'isolant, est collé à la partie formant noyau.

7. Elément d'extrémité de guide de lumière selon la revendication 5 ou 6, caractérisé en ce que le diamètre de l'alésage axial (5) recevant l'extrémité de la fibre est supérieur au diamètre maximal admissible de la fibre.

8. Elément d'extrémité de guide de lumière selon la revendication 7, caractérisé en ce que la partie formant noyau est réalisée en un métal relativement mou, de préférence en un alliage métallique.

9. Elément d'extrémité de guide de lumière selon la revendication 8, caractérisé en ce que la partie formant noyau est fixée par soudage dans la partie extérieure.

*Fig.1*

Fig. 2

Fig. 3